# EUROPÄISCHE PATENTANMELDUNG

(11) **EP 2 014 912 A2**
(43) Veröffentlichungstag der Anmeldung: **14.01.2009**
(21) Anmeldenummer: 07109698.6
(22) Anmeldetag: 06.06.2007
(51) Int. Cl.: F03D 1/00, F03D 11/00

(54) **Windkraftanlage mit Gondel und Verfahren zum Erstellen einer solchen Windkraftanlage**

(71) Anmelder: ICEC Holding AG, 6315 Morgarten (CH)
(72) Erfinder: Grob, Gustav R., 1227, Carouge (CH)
(74) Vertreter: OK pat AG

(57) **Zusammenfassung**

Windkraftanlage (10) mit einem vertikalen Turm (11), mindestens einem Rotor (30) und einer Gondel, und mit mehreren Aggregaten (22, 23, 24). Ein Container (20) mit einer tragenden Rahmenstruktur (21) dient als Gondel, wobei die Rahmenstruktur (21) um eine vertikale Achse (A) drehbar auf dem Turm (11) befestigt ist. Der Container (20) ist mit Verkleidungselementen (25) verkleidet, die an der Rahmenstruktur (21) befestigt sind. Diese Rahmenstruktur (21) trägt den Rotor (30) und die Aggregate (22, 23, 24). Eine horizontale Plattform (40) ist oberhalb des Containers (20) angeordnet und von der Rahmenstruktur (21) getragen. An der Plattform (26) ist ein Hebezeug (50) befestigt, wobei während der Montage der Windkraftanlage (10) mittels des Hebezeugs (50) der Rotor (30) am Turm (11) hochgezogen und am Container (20) befestigt werden kann, und wobei im Fall von Wartungs- und/oder Reparaturarbeiten das Hebezeug (50) einsetzbar ist, um Gegenstände am Turm (11) hochzuziehen.

## Beschreibung

Gegenstand der Erfindung ist eine Windkraftanlage mit Gondel nach dem Oberbegriff des Anspruchs **1** und ein Verfahren zu Erstellen einer solchen Windkraftanlage mit Gondel nach dem Oberbegriff des Anspruchs **8.**

Windkraftanlagen weisen typischerweise einen Unterbau auf, der eine Gondel mit einem Rotor mit Rotorblättern und einem elektrischen Generator trägt. Der Generator wird angetrieben und erzeugt Strom, wenn Wind den Rotor in Rotation versetzt. Im Bereich der Gondel sind häufig weitere Elemente, wie zum Beispiel elektrische Schaltungen, angeordnet, um die Anlage zu kontrollieren und/oder steuern.

Bei konventionellen Windkraftanlagen braucht es zur Endmontage grosse Baukräne, um nach der Fertigstellung des Turms alle Aggregate, wie Gondel, Generator, Propeller usw. auf den Turm zu heben und dort zu installieren. Die Baukräne müssen zum Ort angeliefert und vor Ort aufgebaut werden. Dann werden die Baukräne in Betrieb genommen, um die Lasten auf den Turm zu befördern. Nach diesem Einsatz werden die Baukräne abgebaut und abtransportiert. Der Aufwand und die damit verbundenen Kosten sind enorm. Ausserdem muss für grössere Reparaturen wiederum ein Kran vor Ort gebracht und eingesetzt werden.

Alternativ kommen teilweise Lastenhubschrauber zum Einsatz, was aber auch mit hohen Kosten verbunden ist, ausserdem wobei deren Einsatz bei schlechten Wetterbedingungen nicht möglich ist.

Aufgabe der vorliegenden Erfindung ist es nun,
- eine Vorrichtung vorzuschlagen, um den Aufbau der Aggregate einer Windkraftanlage zu vereinfachen und die entsprechenden Kosten deutlich zu reduzieren, und
- ein Verfahren zum Erstellen einer entsprechenden Windkraftanlage vorzuschlagen.

Die **Lösung** dieser Aufgabe erfolgt erfindungsgemäss
- für die Vorrichtung durch die Merkmale des kennzeichnenden Teils des unabhängigen Anspruchs **1** und
- für das Verfahren durch die Merkmale des kennzeichnenden Teils des unabhängigen Anspruchs **8.**

Bevorzugte Ausführungen und Weiterbildungen der Erfindung sind durch die jeweiligen abhängigen Ansprüche definiert.

Besonders bevorzugt ist eine Ausführungsform einer Windkraftanlage mit einem vertikalen Turm, einem oder zwei vom Wind antreibbaren Rotor/en, und einer Gondel, die mehrere Aggregate umfasst. Gemäss Erfindung dient ein Container mit einer tragenden Rahmenstruktur als Gondel, wobei die Rahmenstruktur um eine vertikale Achse drehbar auf dem Turm befestigt ist, der Container mit Verkleidungselementen verkleidet ist und die Rahmenstruktur den Rotor und die mehreren Aggregate trägt. Oberhalb des Containers ist eine horizontale Plattform angeordnet, die von der Rahmenstruktur getragen wird. An der Plattform ist ein Hebezeug befestigt. Während der Montage der Windkraftanlage werden mit dem Hebezeug der Rotor und ggfs. weitere Bestandteile am Turm hochgezogen und an der Gondel befestigt. Im Fall von Wartungs- und/oder Reparaturarbeiten ist das Hebezeug einsetzbar, um Gegenstände am Turm hochzuziehen.

Das erfindungsgemässe Verfahren beruht auf den folgenden Schritten. Es wird ein Container, vorzugsweise ein Container mit ISO Standard-Aussenmassen, mit einer tragenden Rahmenstruktur und mit einer aussenliegenden Plattform installiert, wobei der Container als Gondel der Windkraftanlage dient. Dann wird ein Hebezeug eingesetzt, das auf oder an der Plattform befestigt ist, um einen Rotor der Windkraftanlage entlang des Turms nach oben zu befördern. In einem weiteren Schritt wird der Rotor an den Aggregaten der Windkraftanlage befestigt bzw. mit diesen verbunden, wobei während dem Anbringen der Rotor von dem Hebezeug in Position gehalten wird.

Das beschriebene Verfahren eignet sich besonders gut zur Verwendung in Kombination mit dem Verfahren zur vertikalen Extrusion eines Turms, gemäss Patentanmeldung PCT/EP2006/065719, die unter der Nummer WO-2007 / 025947 publiziert ist. Hierbei kann der Container samt Plattform vor oder während der Extrusion bereits auf dem von unten anwachsenden Turm befestigt werden.

Weitere Vorteile ergeben sich unmittelbar aus der Beschreibung und den dazu gehörenden Zeichnungen.

Im Folgenden wird die Erfindung anhand von Ausführungsbeispielen und mit Bezug auf die Zeichnungen ausführlich beschrieben. Es zeigen:
- **Fig. 1**: eine erste erfindungsgemässe Windkraftanlage in einer schematischen, seitlichen Schnittdarstellung;
- **Fig. 2**: eine zweite erfindungsgemässe Windkraftanlage während der Montage in einer schematischen, seitlichen Schnittdarstellung;
- **Fig.3**: die zweite erfindungsgemässe Windkraftanlage in einer schematischen Draufsicht.

Konstruktive Elemente mit gleicher Funktion sind in allen Figuren mit gleichen Bezugszeichen versehen.

Im Folgenden wird für die Windkraftanlage die Bezeichnung WKA verwendet. Diese Bezeichnung soll auch Windkraftwerke oder als WEK bezeichnete Windenergiekonverter einschliessen.

Die Erfindung beruht auf dem Einsatz eines Containers 20 mit einer selbsttragenden Rahmenstruktur 21 als Gondel einer Windkraftanlage 10, die von Wind W angeströmt wird. Der Einsatz eines Containers 20, insbesondere mit normierten Container-Abmessungen, an Stelle einer üblichen Gondel, erlaubt es, alle relevanten Aggregate (z.B. Transformator 22, Schaltschrank 23, und/oder Generator 24) und Teile an einer tragenden Rahmenstruktur 21 des Containers 20 zu befestigen und zu minimalen Kosten an den Bestimmungsort zu transportieren. Die Rahmenstruktur 21 ist so ausgelegt, dass sie in der Lage, ist sämtliche Aggregate und Teile zu tragen, und die Kräfte, die auftreten, in den Turm 11 einzuleiten.

Dadurch, dass der Container 20 eine tragende Rahmenstruktur hat, kann er problemlos zur Baustelle der Windkraftanlage 10 transportiert und dort angehoben werden. Der Einsatz eines solchen Containers 20 mit Rahmenstruktur 21 ermöglicht es, bereits im Werk gewisse Aggregate und Elemente zu montieren und zu testen. Während des Transports zur Baustelle dient der Container 20 dadurch gleichzeitig als Transportbehälter, der die Aggregate und Elemente schützt.

Besonders bevorzugt ist ein Container 20, der mehrere Vertikalträger und Horizontalträger aufweist, die zu einer Struktur für eine Kastenform zusammengeschweisst, genietet oder geschraubt sind. Vorzugsweise kommen in den Ecken der Kastenform sogenannte Eckmuffen zum Einsatz, um die Vertikalträger und die Horizontalträger und ggfs. Querträger bzw. Schrägträger miteinander zu verbinden. Diese Eckmuffen dienen vorzugsweise auch als Tragpunkt für das Anheben und/oder Sichern des Containers 20. Die Eckmuffen können gleich ausgeführt sein wie bei Standardcontainern.

Ganz besonders bevorzugt sind Container 20, die den üblichen Standards (z.B. ISO Norm), insbesondere Abmessungsstandards, entsprechen, weil dadurch gewährleistet ist, dass der Transport mit üblichen Schiffen und Fahrzeugen möglich ist. Besonders geeignet sind Container 20, die den herkömmlichen Seecontainern gleichen. Besonders bewährt haben sich sogenannte 20-Fuss Container 20 (20' ISO Container). Vorzugsweise haben die Container 20, wie ein ISO-Container, eine Breite von 8 Fuß (2,44 m) und eine Länge von 20 Fuß (6,096 m). Die Höhe beträgt ca. 2,6m.

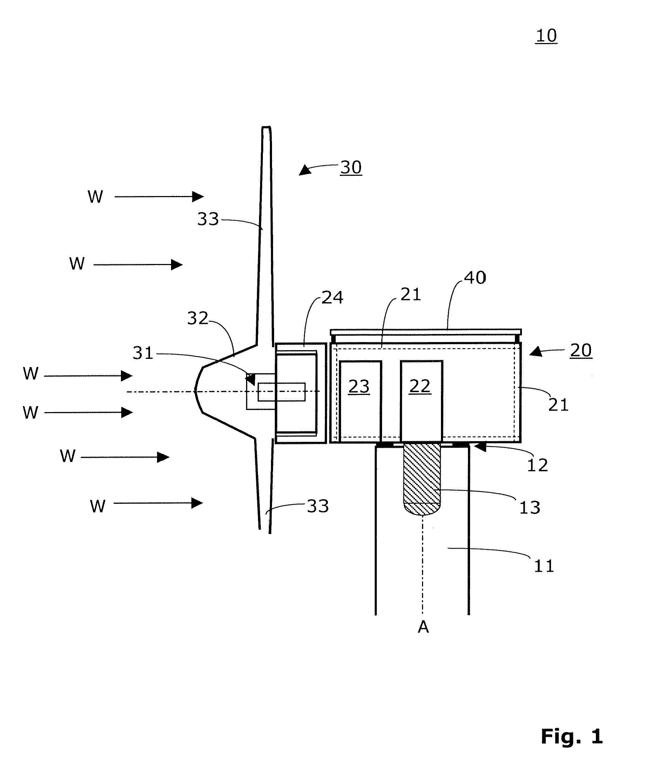

Um den Container 20 mit seiner Rahmenstruktur 21 auf dem Turm 11 befestigen zu können, weist die Rahmenstruktur 21 in ihrem Bodenbereich vorzugsweise eine Verbindungsstruktur auf (z.B. in Form eines Verbindungsflansches), die besonders stabil ausgelegt ist. Diese Verbindungsstruktur, die auch als Gondelstruktur bezeichnet werden kann, ist vorzugsweise in die Rahmenstruktur 21 eingeschweisst. An der in Fig. 1 mit 12 bezeichneten Stelle wird der Container 20 drehbar mit dem Turm 11 verbunden.

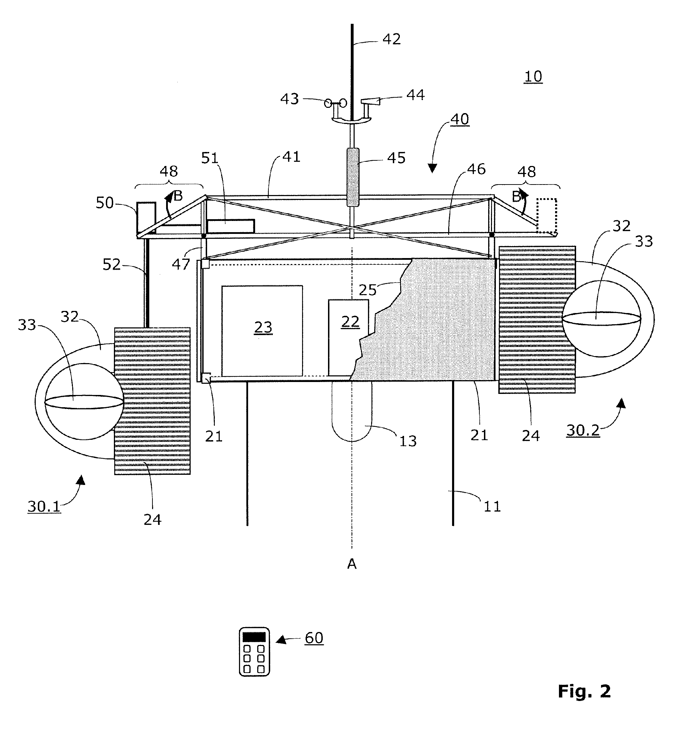

In einer besonders bevorzugten Ausführungsform der Erfindung sitzt an der Verbindungsstruktur eine Gondelwelle 13, die koaxial zu einer Achse A verläuft, wenn der Container 20 auf dem Turm 11 montiert ist. Die Gondelwelle 13 ist, wie in Fig. 2 schematisch angedeutet, an der Gondel 20 fixiert. Turmseitig sind in den Figuren nicht gezeigte Lager vorgesehen, um die Gondelwelle 13 axial und radial zu lagern. Durch eine geeignete Wahl von Gleit- und/oder Wälzlagern kann sich damit der Container 20 in gesicherter Position um die Achse A drehen. Damit kann eine Ausrichtung in Bezug auf die jeweils herrschende Windrichtung erfolgen, falls dies erwünscht ist.

Der Container 20 ist, wie schon erwähnt, mit meist plattenähnlichen bzw. flächigen Verkleidungselementen 25 verkleidet, wie in Fig. 2 angedeutet. In Fig. 2 ist ein Teil eines vorderen Verkleidungselements 25 zu erkennen. Ein weiterer Teil des Verkleidungselements 25 ist aufgebrochen, um Einzelheiten im Inneren des Containers 20 darstellen zu können. Die Verkleidungselemente 25 sind an der Rahmenstruktur 21 befestigt.

Die Verkleidungselemente 25 sind vorzugsweise aus Metall und dienen so auch als Abschirmung der elektronischen/elektrischen Komponenten, die sich zum Beispiel in einem Schaltschrank 23 befinden können. Auch der Transformator 22 kann in der Gondel 20 montiert werden.

Gemäss Erfindung befindet sich oberhalb des Containers 20 eine horizontale, aussenliegende, zum Beispiel brückenartige Plattform 40, die von der Rahmenstruktur 21 getragen wird. Vorzugsweise ist diese Plattform 40 durch Stützelemente 47 mit der Rahmenstruktur 21 verbunden.

Die Plattform 40 kann mehrere Funktionen haben. Einerseits trägt sie Aggregate der Windkraftanlage 10. Dieses Merkmal ist optional. Bei diesen Aggregaten kann es sich um eines oder mehrere der folgenden Aggregate handeln: Blitzableiter 42, Winddruckmesser 43, Windsteueranlage 44 zum Bestimmen der momentanen Windrichtung, Antrieb für das Hebezeug 50, insbesondere Hydraulikpumpe, Antenne 45 (z.B. GSM Antenne), usw.

Ausserdem kann an der Plattform 40 eine Trittfläche 46 vorgesehen sein, die es Montage- oder Wartungspersonal ermöglicht, die Windkraftanlage 10 zu betreten, um z.B. die Windflügel 33 zu inspizieren. Dieses Merkmal ist optional. Vorzugsweise ist die Trittfläche 46 beheizbar, um zu verhindern, dass sich Eis- oder Schneelast ansammelt.

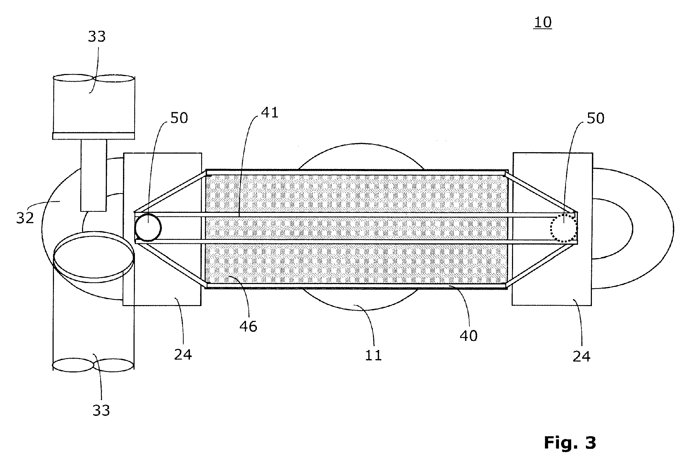

Weiterhin kann die Plattform 40, wie in Fig. 2 und 3 gezeigt, eine Rahmenstruktur 41 mit Verstrebungen und Spannelementen, zum Beispiel Spannseilen, aufweisen. Auch dieses Merkmal ist optional. Besonders bevorzugt ist eine Ausführungsform, bei welcher die Plattform 40 Dimensionen hat, die denjenigen eines ISO Halbcontainers entsprechen. Dadurch wird der Transport und die Handhabung der Plattform 40 einfacher und günstiger. Es können an der Plattform 40 auch, wie ggfs. auch am Container 20, spezielle Verkleidungselemente vorgesehen sein, die als Windabweiser dienen und/oder der Plattform 40 ein windschlüpfriges und/oder ästhetischeres Aussehen verleihen.

Ein weiteres wesentliches Merkmal ist die Anordnung eines Hebezeugs 50 an oder auf oder unter der Plattform 40. Damit können während der Montage der Windkraftanlage 10 mittels des Hebezeugs 50 Rotoren 30, 30.1, 30.2 am Turm 11 hochgezogen und am Container 20 befestigt werden. In Fig. 2 ist eine Momentaufnahme gezeigt, bei welcher der linke Rotor 30.1 nach oben gezogen wird, wobei der rechte Rotor 30.2 bereits montiert ist.

Das Hebezeug 50, beispielsweise eine Litzenheber-Anordnung, kann aber auch im Fall von Wartungs- und/oder Reparaturarbeiten eingesetzt werden, um z.B. Gegenstände (Werkzeug, Ersatzteile, Aufzugsplattform) am Turm 11 hochzuziehen. Zu diesem Zweck verbleibt das Hebezeug 50 vorzugsweise auf der Plattform 40. In einer bevorzugten Ausführungsform wird das Hebezeug 50 durch eine geeignete, vorzugsweise aerodynamisch günstige Zusatzverkleidung gegen Wind und Wetter geschützt.

In den Fig. 2 und 3 ist eine Ausführungsform gezeigt, die mehrere Aggregate und Elemente aufweist. An der Plattform 40 sind mehrere Verstrebungen 41 und Spannelemente, zum Beispiel Spannseile, vorgesehen, um dem gesamten Aufbau der Plattform 40 Stabilität zu verleihen. Weiterhin sind an einem Mast Blitzableiter 42, Winddruckmesser 43, Windsteueranlage 44 und Antennenanlage 45 vorgesehen. Der Winddruckmesser 43 und die Windsteueranlage 44 sind mit einer Steuerungsvorrichtung verbunden, die es ermöglicht die Windkraftanlage 10 an die jeweilige Wetter- und Windsituation anzupassen.

Auf der Trittfläche 46 kann eine Hydraulikpumpe 51 mit einer Schlauchverbindung angeordnet sein, die als Antrieb für das Hebezeug 50 dienen. Vorzugsweise ist die Trittfläche 46 mit Antirutsch-Strukturen versehen, um ein Abrutschen zu verhindern.

Ein weiteres vorteilhaftes Merkmal ist die Anordnung eines ausklappbaren Auslegers 48 an der Plattform 40. Die in Fig. 2 und 3 gezeigte Ausführungsform weist zwei solche Ausleger 48 auf. Beide Ausleger 48 sind in den Fig. 2 und 3 in ausgeklappten Zustand gezeigt. Durch Pfeile B in Fig. 2 ist angedeutet, dass die Ausleger 48 eingekiappt werden können. Im eingeklappten Zustand hat die Plattform 40 eine laterale Abmessung, die ungefähr der lateralen Abmessung, Länge und/oder Breite, des Containers 20 entspricht. Dadurch vereinfacht sich der Transport des Containers 20 samt der Plattform 40, die vorzugsweise im Werk auf dem Container 20 vormontiert wird.

Durch das Ausklappen des/der Ausleger 48 wird eine Förderlitze 52 des Hebezeugs 50 in eine Betriebsposition gebracht. In dieser Betriebsposition verläuft die Förderlitze 52 parallel zur vertikalen Achse A des Turms 11 und kann herunter gelassen werden, ohne mit anderen Elementen der Windkraftanlage 10 zu kollidieren. Vorzugsweise wird die Förderlitze 52 an einem Punkt an dem hochzuziehenden Bauteil, zum Beispiel an dem Rotor 30.1, befestigt, welcher auf einer Geraden durch den Schwerpunkt des Bauteils liegt. Der Rotor 30.1, zusammen mit dem Generator 24, kann, wie in Fig. 2 angedeutet, mit den Eigenmitteln der Windkraftanlage 10 nach oben gefördert werden. Nach dem Erreichen der obersten Position wird der Rotor 30.1 mit seiner Nabe 31 gemäss Fig. 1 verbunden. Während diesem Montageschritt kann sich Montagepersonal auf der Plattform 40 befinden, um die notwendigen Verbindungen herzustellen.

In einer bevorzugten Ausführungsform der Erfindung umfasst die Windkraftanlage 10 eine Steuerung 60 zum Fernsteuern des Hebezeugs 50. Diese Steuerung 60 kann mit einer Kabelverbindung und/oder einer kabellosen Verbindung mit einer eigentlichen Steuereinheit verbunden sein. Die Steuereinheit kann sich zum Beispiel im Schaltschrank 23 im Container 20 befinden.

Die Plattform 40 kann, ähnlich wie Traggerüste an Gebäuden für Fensterputzer, eine Aufzugsplattform bzw. einen Aufzugskorb umfassen, die durch Betätigen der Steuerung 60 von der Plattform 40 bis zum Boden hinab gelassen werden kann. Mit diesem Aufzugskorb können Personen auf die Plattform 40 befördert werden. Vorzugsweise sind an der Plattform 40 zu diesem Zweck Schwenkarme vorgesehen.

Die Erfindung eignet sich sowohl für Windkraftanlagen 10 mit nur einem Rotor 30, wie in Fig. 1 gezeigt, als auch für Windkraftanlagen 10 mit 2 Rotoren, wie in Fig. 2 und 3 gezeigt. Falls zwei Rotoren 30.1, 30.2 vorgesehen sind, so ist ein Teil der Aggregate 24 doppelt vorhanden. Alternativ können zwei solche Rotoren einen gemeinsamen Generator antreiben, wobei dann Kupplungsmittel vorvorgesehen sind, um Unterschiede der Rotationsgeschwindigkeiten ausgleichen zu können.

In der eingangs genannten Patentanmeldung ist ein Verfahren zum Herstellen eines extrudierten Betonturms beschrieben. Die vorliegende Erfindung eignet sich besonders gut zur Anwendung im Zusammenhang mit diesem Extrusionsverfahren, da der Container 20 samt Plattform 40 zu Beginn des Extrusionsverfahren oder in einem Zwischenschritt auf dem oberen Bereich des anwachsenden Turms 11 installiert werden kann. Durch den Druck von Pumpen wird bei der Extrusion der Container 20 nach oben befördert.

Diese Anordnung hat den Vorteil, dass vor Ort kein Baukran benötigt wird. Ausserdem können alle wesentlichen Elemente bzw. Aggregate 22, 23 (und eventuell auch 24) problemlos montiert und getestet werden, während der Container 20 mit der Plattform 40 oder mindestens der Container 20 oder die Plattform 40 noch am Boden bzw. im Werk ist. Vor allem die Mittel zur Lagerung der Gondelwelle 13 in einem Lager des Turms 11 können dadurch in aller Ruhe aufgebaut und justiert werden.

Der Container 20 kann aber auch auf einen fertigen Turm 11 befördert werden. Zu diesem Zweck kann einmalig ein Kran oder, vorzugsweise, ein Hubschrauber eingesetzt werden.

In einer bevorzugten Ausführungsform sind an dem Container 20 Luftklappen vorgesehen, insbesondere steuerbare Luftklappen oder Rückschlagluftklappen, vorzugsweise mit Dämpfungsmitteln, die automatisch geöffnet werden, um bei zu hohem Winddruck durch das Öffnen der Luftklappen eine Reduktion des Winddruck auf den Container 20 zu erreichen.

In einer weiteren bevorzugten Ausführungsform sind im Bereich zwischen dem Container 20 und dem Generator 24 Mittel angeordnet, um den Rotor 30 samt dem Generator 24 leicht mit nach unten weisender Nabe 31 kippen zu können. Die Mittel können zum Beispiel einen Antrieb und eine Schnecke umfassen, um die Neigung einstellen zu können.

## Patentansprüche

1. Windkraftanlage (10) mit einem vertikalen Turm (11), einem von Wind (W) antreibbaren Rotor (30) und einer Gondel (20), die mehrere Aggregate (22, 23, 24) umfasst,
**dadurch gekennzeichnet,**
- **dass** ein Container (20) mit einer tragenden Rahmenstruktur (21) die Gondel bildet, wobei
o die Rahmenstruktur (21) um eine vertikale Achse (A) drehbar auf dem Turm (11) befestigt ist,
o der Container (20) mit Verkleidungselementen (25) verkleidet ist, die an der Rahmenstruktur (21) befestigt sind,
o die Rahmenstruktur (21) den Rotor (30) und die mehreren Aggregate (22, 23, 24) trägt,
- **dass** eine Plattform (40) oberhalb des Containers (20) angeordnet und von der Rahmenstruktur (21) getragen wird, und
- **dass** ein Hebezeug (50) an der Plattform (26) befestigt ist, wobei
o während der Montage der Windkraftanlage (10) mittels des Hebezeugs (50) der Rotor (30) am Turm (11) hochziehbar und an der Gondel befestigbar ist, und
o für Wartungs- und/oder Reparaturarbeiten das Hebezeug (50) einsetzbar ist, um Gegenstände am Turm (11) hochzuziehen.

2. Windkraftanlage (10) nach Anspruch 1,
**dadurch gekennzeichnet,**
**dass** der Container (20) ein kastenartiger Standardcontainer, vorzugsweise ein ISO Container, ist, dessen Rahmenstruktur (21) mehrere Vertikalträger und mehrere Horizontalträger aufweist, die, vorzugsweise mit Eckmuffen, zu einer selbsttragenden Struktur verbunden sind.

3. Windkraftanlage (10) nach Anspruch 1 oder 2,
**dadurch gekennzeichnet,**
**dass** eines oder mehrere der folgenden Aggregate oder Elemente auf oder an der Plattform (40) befestigt sind:
- Verstrebungen (41),
- Spannelemente,
- Blitzableiter (42),
- Winddruckmesser (43),
- Windsteueranlage (44),
- Hydraulikpumpe (51) als Antrieb für das Hebezeug (50),
- Antennenanlage (45),
- Trittfläche (46), vorzugsweise beheizbar.

4. Windkraftanlage (10) nach Anspruch 1 oder 2,
**dadurch gekennzeichnet,**
**dass** die Plattform (40) mindestens einen ausklappbaren Ausleger (48) aufweist, von welchem in einem ausgeklappten Zustand eine Förderlitze (52) des Hebezeugs (50) parallel zur vertikale Achse (A) des Turms (11) herunter gelassen werden kann.

5. Windkraftanlage (10) nach Anspruch 1 oder 2,
**dadurch gekennzeichnet,**
**dass** sie eine Steuerung (60) zum Fernsteuern des Hebezeugs (50) umfasst.

6. Windkraftanlage (10) nach Anspruch 4,
**dadurch gekennzeichnet,**
**dass** zwei vom Wind (W) antreibbare Rotoren (30) vorhanden sind, und ein erster Rotor (30.1) an einer ersten Seite des Containers (20) und ein zweiter Rotor (30.2) an einer zweiten Seite des Containers (20) angeordnet sind, wobei die zweite Seite parallel zur ersten Seite verläuft.

7. Windkraftanlage (10) nach Anspruch 4 oder 6,
**dadurch gekennzeichnet,**
**dass** es sich bei dem Turm (11) um einen extrudierten Betonturm handelt.

8. Verfahren zum Erstellen einer Windkraftanlage (10) mit einem vertikalen Turm (11) mit vertikaler Achse (A), einem von Wind (W) antreibbaren Rotor (30), und einer Gondel, die mehrere Aggregate (22, 23, 24) umfasst,
**gekennzeichnet durch** die folgenden Schritte:
- Installieren eines Containers (20) mit einer tragenden Rahmenstruktur (21) und mit einer aussenliegenden Plattform (40), wobei der Container (20) als Gondel der Windkraftanlage (10) dient,
- Einsetzen eines Hebezeugs (50), das auf oder an der Plattform (40) befestigt ist, um den Rotor (30) entlang des Turms (11) nach oben zu befördern,
- Anbringen des Rotors (30) an den Aggregaten (22, 23, 24), wobei während dem Anbringen der Rotor (30) von dem Hebezeug (50) in Position gehalten wird.

9. Verfahren nach Anspruch 8,
**dadurch gekennzeichnet,**
**dass** der Container (20) samt Plattform (40) erst nach der Fertigstellung des Turms (11) auf demselben installiert wird.

10. Verfahren nach Anspruch 8,
**dadurch gekennzeichnet,**
**dass** der Turm (11) durch vertikale Extrusion vor Ort hergestellt wird, und der Container (20) samt Plattform (40) vor oder während der Extrusion auf dem Turm (11) installiert wird, und zusammen mit dem während der Extrusion vertikal nach oben wachsenden Turm (11) nach oben gefördert wird.

11. Verfahren nach Anspruch 8,
**dadurch gekennzeichnet,**
**dass** an der Plattform (40) mindestens ein ausklappbarer Ausleger (48) vorhanden ist, der vor dem Einsetzen des Hebezeugs (50) in einen ausgeklappten Zustand überführt wird, damit eine Förderlitze (52) des Hebezeugs (50) parallel zur vertikale Achse (A) des Turms (11) herunter gelassen werden kann.
